# FASCICULE DE BREVET EUROPEEN

(11) **EP 4 601 944 B1**
(45) Date de publication et mention de la délivrance du brevet: **01.07.2026**
(21) Numéro de dépôt: 23783373.6
(22) Date de dépôt: 30.09.2023
(51) Int. Cl.: B64C 1/14

(54) **PERFECTIONNEMENT DU MÉCANISME DE VERROUILLAGE/DÉVERROUILLAGE D'UNE PORTE D'AERONEF À ÉCHAPPEMENT LATÉRAL DES BUTÉES**
VERBESSERUNG DES VERRIEGELUNGS-/ENTRIEGELUNGSMECHANISMUS EINER FLUGZEUGTÜR MIT SEITLICHER NOTÖFFNUNG DER HALTEORGANE
IMPROVEMENT OF THE LOCKING/UNLOCKING MECHANISM OF AN AIRCRAFT DOOR WITH LATERAL ESCAPE OF THE STOPS

(30) Priorité: 13.10.2022 FR 2210548
(43) Date de publication de la demande: 20.08.2025
(73) Titulaire: Latecoere, 31500 Toulouse (FR)
(72) Inventeur: DEVILLEZ, Sébastien, 31240 SAINT JEAN (FR); QUEMENT, Stephane, 31500 TOULOUSE (FR); GILDAS, Martin, 31240 L'UNION (FR)
(74) Mandataire: Junca, Eric
(86) Numéro de dépôt international: PCT/EP2023/077187
(87) Numéro de publication internationale: WO 2024/078900

(56) Documents cités:
- WO-A1-2020/253986
- US-A- 4 720 065
- US-A1- 2021 070 416
- US-A1- 2021 387 713

## Description

### DOMAINE TECHNIQUE

L'invention concerne le domaine de l'aéronautique et, plus particulièrement, les portes d'aéronefs dites « à échappement latéral » et s'intéresse à un perfectionnement de leurs mécanismes intégrés de verrouillage et de déverrouillage.

Un aéronef comporte généralement plusieurs ouvertures dans son fuselage, pour permettre l'accès à la cabine ou aux soutes. Ces ouvertures sont munies de portes dont le mécanisme de verrouillage/déverrouillage doit assurer la solidité du verrouillage et l'étanchéité de cette porte pendant le vol. De plus, l'ouverture doit être simple et rapide à réaliser par le personnel navigant, soit depuis l'intérieur de l'aéronef, soit depuis l'extérieur par des équipes de secours. La résistance au différentiel de pression entre l'intérieur et l'extérieur de la cabine est réalisée au moyen de butées installées sur les pourtours de l'ouvrant de la porte et de son encadrement.

### ART ANTÉRIEUR

Il existe déjà des portes d'aéronef comportant :
- un ouvrant comprenant une structure de porte, une paroi externe fixée sur cette structure et des butées de porte ;
- un dormant comprenant un cadre de porte destiné à être fixé sur le fuselage de l'aéronef et comportant des butées de cadre ;
- un bras de support relié à l'ouvrant et comportant une extrémité montée pivotante sur le cadre de porte, ce bras de support et l'ouvrant étant mobiles entre une position de fermeture dans laquelle l'ouvrant obture le cadre de porte, les butées de porte étant alors verrouillées contre les butées de cadre, une position intermédiaire de déverrouillage dans laquelle les butées de porte sont dégagées des butées de cadre et une position d'ouverture dans laquelle l'ouvrant est dégagé du cadre de porte.

Une telle porte décrite dans la demande de brevet US2001/0070416 est munie d'un mécanisme de verrouillage/déverrouillage adapté à commander le passage de la position de fermeture à la position de déverrouillage et inversement.

Ce mécanisme de verrouillage/déverrouillage comporte, pour son actionnement, un levier ou une poignée interne et un levier ou une poignée externe qui sont montées sur la structure de porte en étant mobiles entre une position de verrouillage et une position de déverrouillage.

Selon certaines cinématiques d'ouverture et fermeture de porte, comme décrit dans le brevet US 4,720,065, la porte s'ouvre et se ferme selon une translation circulaire, la porte étant ainsi maintenue parallèlement au dormant.

La présente invention s'intéresse plus particulièrement à des portes d'aéronef qui se déverrouillent grâce à des mouvements latéraux de l'ouvrant permettant le dégagement des butées de porte par rapport aux butées du dormant sans recourir à des mouvements verticaux de l'ouvrant, comme décrit dans la demande de brevet US 2021/0387713. Ces mouvements latéraux sont ici définis comme des mouvements selon une direction longitudinale parallèle à l'axe longitudinal de l'aéronef.

Le WO 2020/253986 décrit une telle porte d'aéronef dans laquelle le mécanisme de verrouillage/déverrouillage comporte :
- un arbre de commande s'étendant selon un axe sensiblement vertical en étant monté sur la structure de porte selon une liaison pivot autour de l'axe de l'arbre de commande, le levier interne et le levier externe étant reliés transversalement à l'arbre de commande de sorte qu'une action sur l'un des leviers entraine en rotation l'arbre de commande autour de son axe ;
- une piste de guidage solidaire de l'ouvrant et s'étendant selon un plan sensiblement orthogonal à l'arbre de commande et comportant à son extrémité une ouverture ;
- un doigt d'actionnement fixé sur le bras de support et adapté à coopérer avec la piste de guidage ;
- une transmission mécanique adaptée à entrainer un déplacement du doigt d'actionnement lorsque l'arbre de commande est actionné en rotation.

Ce mécanisme de verrouillage/déverrouillage spécifique présente deux configurations, respectivement,
- une configuration d'actionnement correspondant à la course angulaire des leviers entre leur position de verrouillage et leur position de déverrouillage et dans laquelle, la rotation de l'arbre de commande entrainant alors un déplacement du doigt d'actionnement le long de la piste de guidage, et ;
- une configuration de libération dans laquelle les leviers sont en position de déverrouillage et dans laquelle le doigt d'actionnement est mobile entre une première position où il est disposé au niveau de l'ouverture de la piste de guidage et une deuxième position où il est en dehors de la piste de guidage, l'ouvrant étant alors en position d'ouverture.

Dans ce mécanisme de verrouillage/déverrouillage, la transmission mécanique comporte une fourchette disposée en vis-à-vis de la piste de guidage et reliée à l'arbre de commande.

Cette fourchette s'étend selon un plan sensiblement orthogonal à l'arbre de commande et est montée pivotante sur la structure de porte autour d'un axe sensiblement parallèle à l'arbre de commande. La fourchette comporte deux branches d'actionnement et une ouverture à son extrémité.

Dans la configuration de libération, l'ouverture de fourchette est disposée en vis-à-vis de l'ouverture de la piste de guidage.

Dans la configuration d'actionnement, le doigt d'actionnement est inséré à la fois dans la piste de guidage et dans la fourchette de telle sorte que le pivotement de la fourchette entraine un déplacement du doigt d'actionnement le long de la piste de guidage.

A cet effet, le doigt d'actionnement est, d'une part, monté sur un bras d'actionnement qui est solidaire du bras de support et qui est disposé entre la fourchette et la piste de guidage et comporte, d'autre part, un double galet s'étendant transversalement de part et d'autre du bras d'actionnement.

Par ailleurs, la transmission mécanique comporte une came solidaire en rotation de l'arbre de commande et une bielle reliant la came à la fourchette et adaptée à entrainer le pivotement de la fourchette lors de la rotation de la came et de l'arbre de commande.

### EXPOSÉ DE L'INVENTION

Il se trouve que des phénomènes naturels, tels que des pluies verglaçantes ou une eau en surfusion rencontrant un obstacle froid (zéro degré Celsius ou moins), se traduisent par l'apparition d'une couche de glace recouvrant le fuselage et la porte. Cette couche de glace, potentiellement présente au moment de l'ouverture des portes, crée une liaison mécanique bloquante entre l'ouvrant et le dormant qui empêche le déverrouillage de la porte.

Les portes dites « semi plug » actuelles utilisent un mouvement vertical vers le haut pour désengager les butées et cette cinématique exige un espace suffisant entre la partie supérieure de la porte et le fuselage.

Si une telle porte est recouverte de glace, il est alors nécessaire de la rompre par traction dans la partie inférieure de la porte, (ce qui ne demande que de faibles efforts), de cisailler la glace présente sur les côtés ce qui, en revanche, demande des efforts importants mais compatibles avec un mécanisme classique de porte et aussi de rompre en compression la glace dans la partie supérieure ce qui demande normalement des efforts très importants mais l'utilisation d'un joint obturant la porte dans sa partie supérieure rend la glace fragile dans cette zone.

Cependant, une cinématique de porte à échappement latéral des butées s'effectue par une combinaison de translations dans des plans longitudinal et transversal et une rotation d'axe vertical. Cette cinématique a l'avantage de permettre une découpe de la peau du fuselage très proche de celle de la peau de la porte sans jeu additionnel et ainsi de réduire la taille de l'ouverture dans le fuselage à dimensions de passage équivalentes.

Mais, avec une telle porte, tout mouvement horizontal de la porte parallèlement au fuselage sera impossible puisque sur l'un ou l'autre de ses bords latéraux, la porte viendra en compression contre la glace et se trouvera bloquée ce qui est problématique tant sur le plan ergonomique que sécuritaire.

En revanche, un déplacement de l'un de ces bords vers l'intérieur de la cabine permettra de rompre la glace sur ce bord puis sur l'autre par effet dynamique car la glace n'oppose qu'une faible résistance à un effort transversal.

Mais il est nécessaire que cet effort exercé sur l'ouvrant et orienté vers l'intérieur soit produit directement par le mécanisme de verrouillage/déverrouillage car l'utilisation d'une rampe disposée sur le fuselage exigerait au préalable un déplacement latéral pour générer ce déplacement intérieur.

En outre, les normes actuelles de certification technique imposent un effort d'ouverture minimum dès que le différentiel de pression entre l'intérieur et l'extérieur du fuselage a atteint une valeur donnée afin d'éviter les risques d'ouverture accidentelle. Cette pression doit donc renvoyer sur le levier, lors de l'ouverture, un effort supérieur au minimum spécifié.

L'invention a donc pour but d'améliorer les portes d'aéronefs connues de l'art antérieur à échappement latéral des butées et, en particulier, de modifier leur mécanisme de verrouillage/déverrouillage pour intégrer des moyens destinés à briser la glace éventuellement présente entre l'ouvrant et le dormant de porte lors d'une phase préliminaire de l'ouverture de la porte.

Dans ce contexte, l'invention a pour but de proposer un perfectionnement des moyens de transmission mécanique assurant un déplacement préliminaire de la porte orienté transversalement vers l'intérieur pour briser la glace et permettre l'action consécutive du mécanisme de déverrouillage en assurant ainsi la conformité de la porte aux normes de certification en vigueur.

Ce but est atteint au moyen d'un mécanisme de verrouillage/déverrouillage destiné à commander le passage d'une porte d'aéronef à échappement latéral des butées de la position de fermeture à la position de déverrouillage et inversement, ledit mécanisme comportant :
- un levier interne et un levier externe montés sur la porte en étant mobiles entre une position de verrouillage et une position de déverrouillage ;
- un arbre de commande s'étendant selon un axe sensiblement vertical, en étant monté sur la porte selon une liaison pivot, le levier interne et le levier externe étant reliés transversalement à l'arbre de commande de sorte qu'une action sur l'un des leviers entraine en rotation de l'arbre de commande autour de son axe ;
- une piste de guidage s'étendant selon un plan sensiblement orthogonal à l'arbre de commande et comportant à son extrémité une ouverture ;
- un doigt d'actionnement fixé sur un bras de support, ce doigt d'actionnement étant adapté à coopérer avec la piste de guidage ;
- une transmission mécanique adaptée à entrainer un déplacement du doigt d'actionnement lorsque l'arbre de commande est actionné en rotation, ladite transmission comportant une fourchette disposée en vis-à-vis de la piste de guidage et reliée à l'arbre de commande et comportant deux branches d'actionnement et une ouverture à son extrémité de telle sorte que, dans une configuration d'actionnement correspondant à la course angulaire des leviers entre leur position de verrouillage et leur position de déverrouillage, le pivotement de la fourchette entraine un déplacement du doigt d'actionnement le long de la piste de guidage et, dans une configuration de libération où les leviers sont en position de déverrouillage, l'ouverture de la fourchette est disposée en vis-à-vis de l'ouverture de la piste de guidage, caractérisé en ce que les deux branches d'actionnement de la fourchette se rejoignent à l'opposé de son ouverture en une boucle qui est déportée transversalement par rapport à l'axe longitudinal des branches et en ce que l'extrémité fermée de la piste de guidage opposée à son ouverture est pourvue d'une boucle de diamètre élargi dont la paroi délimite, avec le doigt d'actionnement dans la position de fermeture de la porte, un jeu dont le rattrapage permet de produire un effort exercé sur la porte vers l'intérieur lors d'une phase préliminaire du déverrouillage.

Selon une caractéristique avantageuse de l'invention, le mécanisme comporte une came solidaire en rotation de l'arbre de commande.

Selon une autre caractéristique du mécanisme de l'invention, la fourchette est entrainée en rotation par un arbre qui est lui-même entrainé en rotation par la transmission mécanique.

En outre, l'axe vertical de la boucle de la fourchette est décalé par rapport à l'axe de l'arbre de façon à produire un effet mécanique moteur.

Selon une variante de réalisation spécifique, la transmission mécanique comprend une courroie montée, d'une part, autour dudit arbre et, d'autre part, sur un renvoi mécanique intermédiaire en prise avec un galet inséré dans un chemin ménagé dans ladite came.

Selon encore une autre caractéristique du mécanisme de l'invention, dans sa configuration d'actionnement, le doigt d'actionnement est inséré à la fois dans la piste de guidage et dans la fourchette.

De préférence, ce doigt d'actionnement comporte un double galet.

L'invention prévoit que, dans la configuration de libération du mécanisme, l'ouverture de la fourchette est disposée en vis-à-vis de l'ouverture de la piste de guidage.

En outre, le doigt d'actionnement ne se trouve jamais positionné dans la boucle de la fourchette quelle que soit la position du mécanisme.

Un autre objet de l'invention est une porte d'aéronef à échappement latéral des butées équipée d'un mécanisme de verrouillage/déverrouillage tel que défini ci-dessus.

Le mécanisme de l'invention permet de générer un déplacement initial d'un bord de l'ouvrant vers l'intérieur de la cabine avant d'entamer la phase de déverrouillage ce qui assure la rupture de la glace autour de la porte puis de fournir ensuite le mouvement nécessaire au dégagement complet des butées.

A cet effet, l'invention utilise la fourchette pour assurer le déplacement vers l'intérieur et la came est conçue pour autoriser ce mouvement même si la porte est bloquée dans la direction longitudinale par la glace.

Un autre avantage de l'invention est que ce mouvement de la porte vers l'intérieur permet d'éviter son ouverture accidentelle car l'effort à exercer sur le levier (ou la poignée) pour ouvrir la porte est supérieur à 300 Ibs dès que la différentielle de pression est au dessus de 2 psi.

Encore d'autres avantages de l'invention résident dans la réduction des dimensions de l'ouverture du fuselage, la suppression de la bavette, la diminution des rampes du fuselage, la réduction de la dépense énergétique d'ouverture en situation normale et dans la meilleure compacité du mécanisme de verrouillage/déverrouillage.

### PRÉSENTATION DES FIGURES

D'autres caractéristiques et avantages de l'invention ressortiront de la description non limitative qui suit, en référence aux dessins annexés dans lesquels :
[Fig.1] est une vue en perspective de côté d'un mode de réalisation préférentiel du mécanisme de verrouillage/déverrouillage de l'invention équipant une porte à échappement latéral des butées.
[Fig.2] est une vue en perspective de dessous du mécanisme de verrouillage/déverrouillage de la figure 1.
[Fig.3] est une vue partielle de dessous du mécanisme de la figure 1, en position verrouillée.
[Fig.4] est une vue de détail du mécanisme de verrouillage de l'invention dans la position de la figure 3 et illustrant la coopération entre la piste de guidage et le doigt d'actionnement.
[Fig. 5] est une vue partielle de dessous du mécanisme de la figure 1 et illustre une première étape d'une séquence de déverrouillage de la porte destinée à briser la glace.
[Fig. 6] est une vue partielle de dessous du mécanisme de la figure 1 et illustre une deuxième étape d'une séquence de déverrouillage de la porte.
[Fig. 7] est une vue partielle de dessous du mécanisme de la figure 1 et illustre une troisième étape d'une séquence de déverrouillage de la porte.
[Fig. 8] est une vue partielle de dessous du mécanisme de la figure 1 et illustre une quatrième étape d'une séquence de déverrouillage de la porte.

### DESCRIPTION DÉTAILLÉE

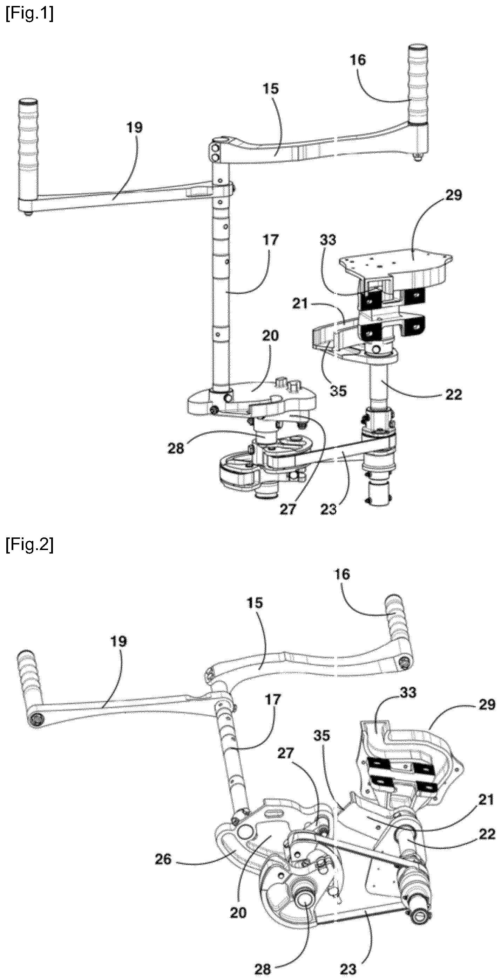

Les figures 1 et 2 sont des vues en perspective d'un mode de réalisation préférentiel du mécanisme de verrouillage/déverrouillage de l'invention représenté seul et appliqué à une porte d'aéronef présentant un mode de fonctionnement dit « à échappement latéral ». Ce mécanisme est décrit et illustré dans la demande de brevet WO2020/253986 à laquelle se réfère la description suivante du perfectionnement selon la présente invention.

Ce fonctionnement consiste en ce que la porte se déverrouille grâce à des mouvements latéraux et de rotation autour de l'axe vertical de l'ouvrant permettant le dégagement des butées de porte par rapport aux butées du cadre dormant. Ces mouvements latéraux sont ici définis comme des mouvements selon une direction longitudinale parallèle à l'axe longitudinal de l'aéronef.

Le perfectionnement selon l'invention intègre, à la cinématique de ce mécanisme, des mouvements perpendiculaires à cet axe dont l'un est dirigé vers l'intérieur pour briser la glace et un autre est dirigé vers l'extérieur pour permettre la sortie de l'ouvrant de son encadrement.

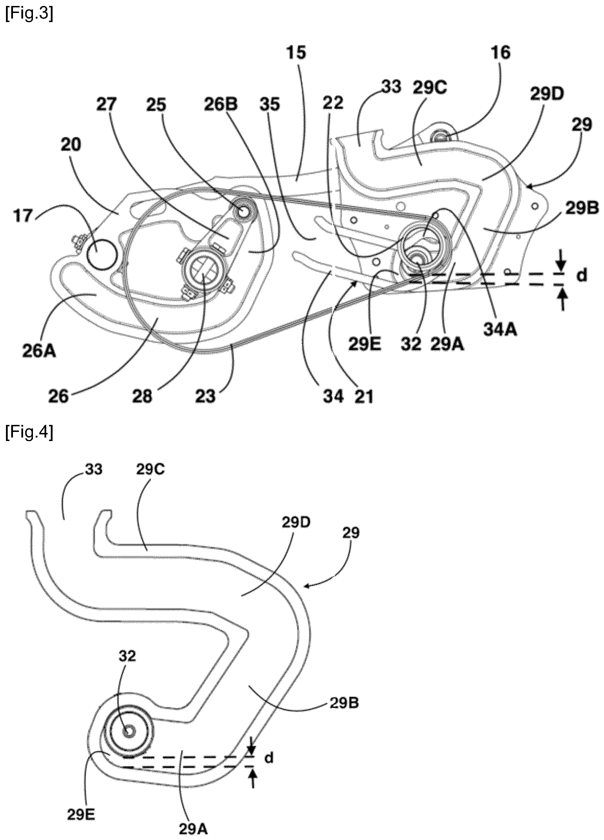

Les figures 3 à 8 sont des figures illustrant les configurations successives d'une partie du mécanisme de verrouillage/déverrouillage selon l'invention de la position de fermeture à la position d'ouverture complète de la porte.

En référence aux figures 1 et 2, le mécanisme de verrouillage/déverrouillage, comprend un arbre de commande 17 monté sur des paliers (non représentés) solidaires de la structure de porte. L'arbre de commande 17 est monté tournant sur la structure de porte (non représentée), autour de son axe longitudinal, qui s'étend verticalement.

Le levier interne 15 prolongé par une poignée 16 et le levier externe 19 sont directement fixés sur l'arbre de commande 17 et s'étendent transversalement à l'arbre et, de préférence, perpendiculairement à cet arbre 17. Les leviers 15, 19 sont fixés sur l'arbre de commande 17 par tout moyen permettant à ces leviers 15, 19 d'entrainer l'arbre de commande 17 en rotation, par exemple par vissage, clavetage, montage à cannelures, etc. Le levier interne 15, le levier externe 19 et l'arbre de commande 17 sont ainsi solidaires, sans aucun dispositif de démultiplication ou de renvoi de mouvement. Ce montage simplifie et fiabilise considérablement l'actionnement du mécanisme.

Le levier externe 19 permet d'actionner l'arbre de commande 17 de la même manière que le levier interne 15, mais est quant à lui accessible depuis l'extérieur de l'aéronef.

Le mécanisme de verrouillage/déverrouillage comporte de plus, et comme décrit dans le WO2020253986A1, une came 20 fixée sur l'arbre de commande 17, à son extrémité opposée aux leviers 15, 19. La came 20 est montée sur l'arbre de commande 17 par tout moyen permettant d'entrainer une rotation de la came 20 lors de la rotation de l'arbre de commande 17 autour de son axe longitudinal.

Le mécanisme de verrouillage/déverrouillage comporte aussi une fourchette 21 qui s'étend selon un plan perpendiculaire à l'arbre de commande 17. Cette fourchette 21 comporte un arbre 22 parallèle à l'arbre de commande 17 et monté rotatif sur la structure de porte. La fourchette 21 est entrainée en rotation par l'arbre 22 qui lui-même est entrainé en rotation par une courroie 23 montée, d'une part, autour de l'arbre 22 et, d'autre part, sur un renvoi mécanique intermédiaire 25 en prise avec un galet associé à la came 20. Toutefois, selon une variante de l'invention non représentée, il est possible de prévoir que la courroie soit remplacée par le couplage d'une bielle et d'un levier ou, plus globalement, par le couplage entre l'arbre du renvoi et l'arbre de la fourchette.

La came 20 comporte un chemin de came 26 dans lequel le galet 25 est captif. La fourchette 21 comporte deux branches d'actionnement 34 qui se rejoignent en une boucle 34A ainsi qu'une ouverture 35 à l'extrémité de ces deux branches. La boucle 34A est déportée transversalement dans le plan de la fourchette par rapport à l'axe longitudinal des branches 34 tandis que son axe vertical est parallèle et décalé vers l'intérieur de la fourchette par rapport à l'arbre 22.

Par ailleurs, le renvoi 25 du galet est associé à un levier 27 qui est pivotant autour d'un arbre 28 parallèle à l'arbre de commande 17. L'arbre 28 est relié à la courroie 23 par l'intermédiaire d'une poulie et est également monté tournant sur la structure de porte. Le levier 27 s'étend orthogonalement à l'arbre 28 et est destiné à restreindre le mouvement du galet et de son renvoi 25 à un arc de cercle centré sur l'arbre 28 et à définir la position du galet dans le chemin de came 26. Le galet est destiné à entraîner l'arbre 28 en rotation lorsque la came 20 tourne.

Le dispositif de verrouillage/déverrouillage comporte de plus une piste de guidage 29 disposée en vis-à-vis de la fourchette 21. La piste de guidage est une pièce qui s'étend dans un plan perpendiculaire à l'arbre de commande 17 et qui comporte un chemin de guidage interne adapté à guider le mouvement d'au moins un doigt d'actionnement.

Entre la piste de guidage 29 et la fourchette 21, s'étend un bras d'actionnement (représenté figures 1 et 2) qui est fixé sur un bras de support (non représenté pour simplifier les figures) comportant à son extrémité un doigt d'actionnement qui est ici constitué d'un double galet 32 (seul le double galet 32 est visible) qui est inséré à la fois dans la piste de guidage 29 et dans la fourchette 21. Ainsi, le double galet 32 est entrainé en déplacement par la fourchette 21 en parcourant la piste de guidage 29. Le double galet 32 ne se trouve jamais positionné dans la boucle 34A quelle que soit la position du mécanisme de verrouillage/déverrouillage (voir la figure 3).

Les figures 3 à 8 sont des vues partielles et de dessous du mécanisme de verrouillage/déverrouillage selon l'invention. Ces figures montrent notamment les formes du chemin de came 26 et de la piste de guidage 29 (uniquement avec le doigt d'actionnement 32 sur la figure 4). Sur ces figures, seul le levier interne 15 et la poignée intérieure 16 ont été représentés, étant entendu que le levier externe 19 est solidaire en rotation de l'arbre de commande 17 et a donc le même comportement.

Le chemin de came 26 présente une forme générale curviligne avec une première plage 26A et une deuxième plage 26B (figure 3).

La piste de guidage 29 présente quant à elle une forme générale en C avec une première plage 29A, une deuxième plage 29B, une troisième plage 29C et un coude intermédiaire 29D entre la deuxième plage 29B et la troisième plage 29C. La largeur de la piste de guidage 29 est uniforme sur les plages 29A, 29B, 29C et dans le coude 29D et correspond sensiblement au diamètre extérieur du double galet 32 de façon à permettre un déplacement coulissant de celui-ci sur la piste 29.

Selon l'invention, l'extrémité fermée de la première plage 29A est pourvue d'une partie en boucle 29E (figures 3, 4 et 6) de diamètre élargi délimitant avec le double galet, dans la position de fermeture de la porte, un jeu d (figures 3 et 4). A l'opposé, l'extrémité de la troisième plage 29C de la piste de guidage 29 comporte une ouverture 33 par laquelle le double galet 32 peut se positionner à la sortie de la piste de guidage 29. L'ouverture 33 présente de préférence une forme d'entonnoir pour faciliter la réception, lors de la fermeture, du double galet 32 dans la piste de guidage 29 et engager la porte à la refermeture, même si le galet n'est pas parfaitement en face de l'entrée de la piste de guidage.

Un procédé de déverrouillage de la porte d'aéronef, préalable à l'ouverture de cette porte, va maintenant être décrit en référence aux figures 3 à 8 sur lesquelles le mécanisme est illustré en vue de dessous, le levier interne 15 situé l'intérieur de la cabine de l'aéronef étant représenté ici sur le dessus des figures.

Dans la position des figures 3 et 4, le levier interne 15 est dans sa position de verrouillage qui correspond à la position de fermeture de la porte. Dans cette position, le galet 25 est en butée à l'extrémité de la plage 26B du chemin de came 26. Conjointement, le double galet 32 est positionné dans la boucle 29E de l'extrémité fermée de la piste de guidage 29 et est calé à l'entrée de la boucle 34A de la fourchette 21 et donc à distance de son extrémité. Le décalage du double galet 32 en direction de l'extrémité 35 par rapport à la boucle 34A de la fourchette 21, le jeu d dans la boucle 29E de la piste 29 et le décalage de l'arbre 22 par rapport à l'axe vertical de la boucle 34A, assurent ainsi le maintien d'une force d'appui de l'ouvrant de la porte contre son encadrement dans le fuselage ce qui permet de comprimer le joint de porte.

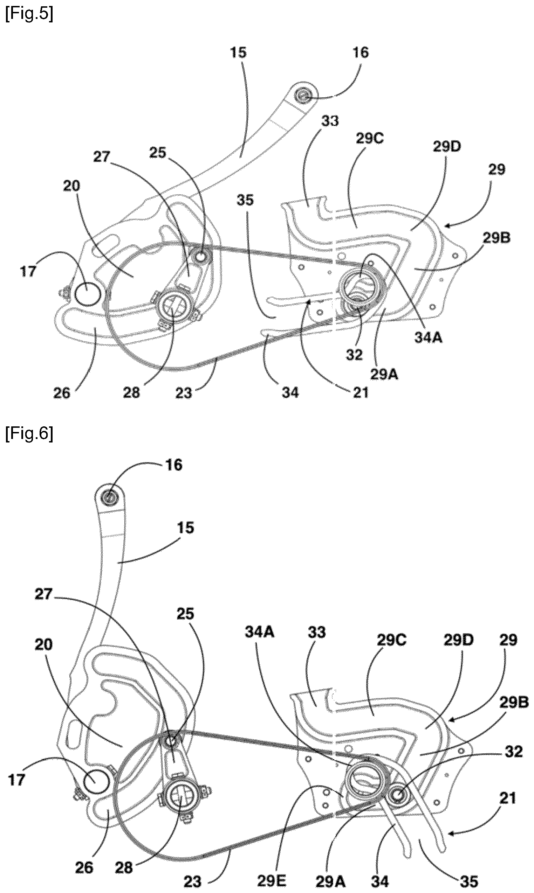

À partir de la position de verrouillage de la figure 3, le levier interne 15 est actionné vers sa position de déverrouillage. La figure 5 illustre cette première phase d'actionnement au cours de laquelle le déplacement du double galet 32 entre les branches 34 de la fourchette 21 et le rattrapage du jeu d dans la boucle 29E génèrent un mouvement des bords de la porte vers l'intérieur en brisant ainsi la glace éventuellement présente à sa périphérie. Conjointement, la fourchette 21 entame un pivotement relativement à la piste de guidage 29. Il est prévu selon l'invention que le déplacement de l'ouvrant vers l'intérieur du fuselage soit de l'ordre de 9mm et peut être ajusté selon le besoin.

La figure 6, illustre une seconde phase dans laquelle l'actionnement du levier 15 entraine la rotation de l'arbre de commande 17 et donc de la came 20. La rotation de la came 20 entraine le galet 25 à parcourir une seconde plage.

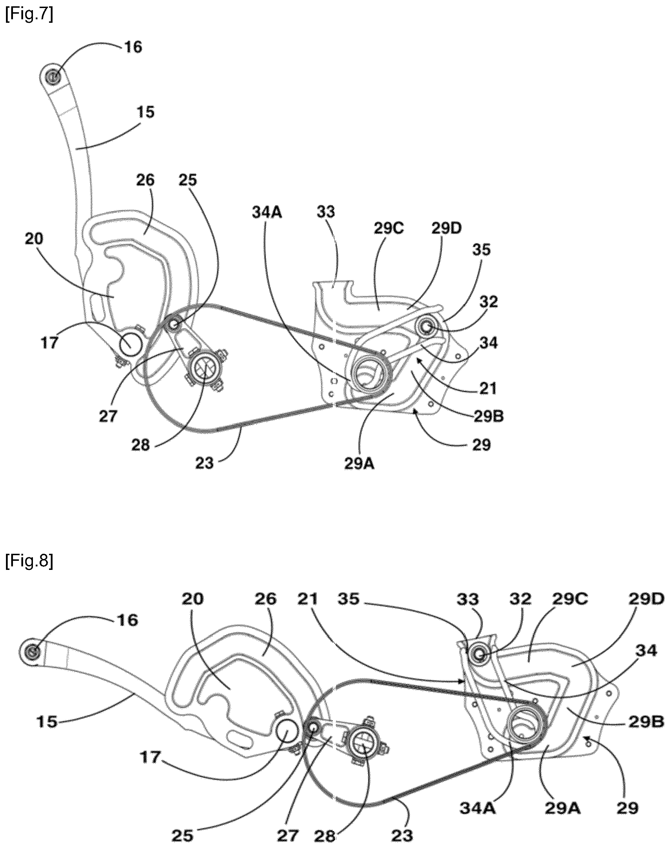

À partir de la position de figure 6, dans une troisième phase d'actionnement, la came 20 poursuit sa rotation et le galet 25 poursuit son parcours dans une deuxième plage. Cette troisième phase d'actionnement abouti à la position illustrée à la figure 7. La fourchette 21, dans son pivotement, a entrainé le double galet 32 le long de la piste de guidage 29. Durant ce déplacement, le double galet 32 a parcouru la première plage 29A et la deuxième plage 29B et se trouve alors dans le coude 29D de la piste de guidage 29. Le double galet 32 étant directement relié au bras de support, ce déplacement entraine un mouvement du bras de support par rapport à l'ouvrant. Ce mouvement entraîne l'ouvrant selon des directions transversale et latérale.

Compte tenu de l'agencement du mécanisme de verrouillage/déverrouillage de l'invention, le déplacement du double galet 32 permet ainsi les mouvements suivants de l'ouvrant :
- un déplacement du double galet 32 dans la plage 29C vers l'extrémité 33 ou en sens opposé entraine un déplacement de l'ouvrant parallèlement au fuselage, respectivement, vers l'avant ou vers l'arrière de l'aéronef ;
- un déplacement du double galet 32 dans la plage 29B vers l'extrémité 33 ou en sens opposé entraine un déplacement de l'ouvrant dans la direction perpendiculaire au fuselage, respectivement, vers l'extérieure de l'aéronef ou vers l'intérieure de l'aéronef.

La piste de guidage 29 permet d'organiser les déplacements du double galet 32, et donc du bras de support, pour provoquer les mouvements souhaités pour l'ouvrant, parmi ces mouvements possibles pour l'ouvrant, qui peuvent être combinés en fonction de l'agencement du bras de support, de l'avant-bras de support, du bras de pivotement, et de l'avant-bras de pivotement.

Dans le présent exemple, en référence à la stratégie de déverrouillage illustrée aux figures 3 à 8, la fin du parcours du double galet 32 dans la piste de guidage 29 correspond à la position illustrée à la figure 8. Dans cette position, l'ouverture 35 de la fourchette 21 est en vis-à-vis de l'ouverture 33 de la piste de guidage 29 de sorte que le double galet 32 peut librement quitter la fourchette 21 et la piste de guidage 29 par leurs ouvertures 33, 35 respectives. Le double galet 32 a parcouru la totalité de la piste de guidage 29 et est maintenant en position de libération. Cette position correspond à la fin de la phase de déverrouillage de la porte et l'ouvrant peut ensuite être manipulé à la main.

L'invention vise ainsi des moyens de verrouillage/déverrouillage à même de provoquer des déplacements de l'ouvrant dans les directions longitudinales et transversales de l'aéronef, étant entendu que l'homme du métier saura combiner ces déplacements et les transformer en rotation en fonction de la stratégie d'ouverture souhaitée.

Le procédé permettant le verrouillage de la porte se déroule selon la même séquence en sens inverse. L'ouvrant est alors ramené manuellement dans la position de la figure 8 où, le double galet 32 est alors introduit dans l'ouverture 35 de la fourchette 21, ainsi que dans l'ouverture 33 de la piste de guidage 29. La manœuvre de l'un des leviers 15, 19, de sa position de déverrouillage vers sa position de verrouillage entrainant alors les phases d'actionnement correspondant, dans l'ordre, aux figures 7, 6, et 5.

Le mécanisme de verrouillage/déverrouillage comporte ainsi :
- une configuration d'actionnement correspondant à la course angulaire des leviers 15, 19 entre leur position de verrouillage et leur position de déverrouillage, configuration dans laquelle l'entrainement en rotation de la fourchette 21 entraine le déplacement du double galet 32 le long de la piste de guidage 29 ;
- une configuration de libération dans laquelle les leviers 15, 19 sont en position de déverrouillage et l'ouverture de la fourchette est disposée en vis-à-vis de l'ouverture de la piste de guidage 29 (à partir de la position de la figure 8). Dans cette configuration, le double galet 32 est soit à sa position de la figure 8, soit en dehors de la piste de guidage 29 (position non représentée).

Des variantes de réalisation de la porte d'aéronef peuvent être mises en œuvre sans sortir du cadre de l'invention. Par exemple, le doigt d'actionnement 32 et le galet 25 peuvent comporter un ou plusieurs galets roulants ou à friction, ou tout autre dispositif pouvant être entrainé à parcourir la piste de guidage 29 ou le chemin de came 26.

Par ailleurs, la forme de la piste de guidage 29 peut être adaptée pour d'autres stratégies d'ouverture et de fermeture que celle donnée ici en exemple, en exploitant les possibilités de mouvements de l'ouvrant entrainées par les mouvements possibles du doigt d'actionnement 32.

## Revendications

1. Porte d'aéronef à échappement latéral des butées équipée d'un mécanisme de verrouillage/déverrouillage destiné à commander le passage de la position de fermeture à la position de déverrouillage et inversement, ledit mécanisme comportant :
- un levier interne (15) et un levier externe (19), montés sur la porte en étant mobiles entre une position de verrouillage et une position de déverrouillage ;
- un arbre de commande (17) s'étendant selon un axe sensiblement vertical, en étant monté sur la porte selon une liaison pivot, le levier interne (15) et le levier externe (19) étant reliés transversalement à l'arbre de commande (17) de sorte qu'une action sur l'un des leviers (15,19) entraine en rotation de l'arbre de commande (17) autour de son axe ;
- une piste de guidage (29) s'étendant selon un plan sensiblement orthogonal à l'arbre de commande (17) et comportant à son extrémité une ouverture (33) ;
- un doigt d'actionnement (32) fixé sur un bras de support, ce doigt d'actionnement (32) étant adapté à coopérer avec la piste de guidage (29) ;
- une transmission mécanique adaptée à entrainer un déplacement du doigt d'actionnement (32) lorsque l'arbre de commande (17) est actionné en rotation, ladite transmission comportant une fourchette (21) disposée en vis-à-vis de la piste de guidage (29) et reliée à l'arbre de commande (17) et comportant deux branches d'actionnement (34) et une ouverture (35) à son extrémité de telle sorte que, dans une configuration d'actionnement correspondant à la course angulaire des leviers (15,19) entre leur position de verrouillage et leur position de déverrouillage, le pivotement de la fourchette (21) entraine un déplacement du doigt d'actionnement (32) le long de la piste de guidage (29) et, dans une configuration de libération où les leviers (15,19) sont en position de déverrouillage, l'ouverture (35) de la fourchette (21) est disposée en vis-à-vis de l'ouverture (33) de la piste de guidage (29), **caractérisé en ce que** les deux branches d'actionnement (34) de la fourchette (21) se rejoignent à l'opposé de son ouverture (35) en une boucle (34A) qui est déportée transversalement par rapport à l'axe longitudinal des branches (34) et **en ce que** l'extrémité fermée de la piste de guidage (29) opposée à son ouverture (33) est pourvue d'une boucle (29E) de diamètre élargi dont la paroi délimite, avec le doigt d'actionnement (32) dans la position de fermeture de la porte, un jeu (d) dont le rattrapage permet de produire un effort exercé sur la porte vers l'intérieur lors d'une phase préliminaire du déverrouillage.

2. Porte selon la revendication 1, **caractérisée en ce qu'**il comporte une came (20) solidaire en rotation de l'arbre de commande (17).

3. Porte selon l'une des revendications précédentes, **caractérisée en ce que** la fourchette (21) est entrainée en rotation par un arbre (22) qui est lui-même entrainé en rotation par ladite transmission mécanique.

4. Porte selon la revendication 3, **caractérisée en ce que** l'axe vertical de la boucle (34A) de la fourchette (21) est décalé par rapport à l'axe de l'arbre (22) de façon à produire un effet mécanique moteur.

5. Porte selon l'une des revendications 2 à 4, **caractérisée en ce que**, la transmission mécanique comprend une courroie (23) montée, d'une part, autour dudit arbre (22) et, d'autre part, sur un renvoi mécanique intermédiaire (25) en prise avec un galet inséré dans un chemin (26) ménagé dans ladite came (20).

6. Porte selon l'une des revendications précédentes, **caractérisée en ce que**, dans sa configuration d'actionnement, le doigt d'actionnement (32) est inséré à la fois dans la piste de guidage (29) et dans la fourchette (21).

7. Porte selon l'une des revendications précédentes, **caractérisée en ce que** le doigt d'actionnement (32) comporte un double galet.

8. Porte selon l'une des revendications précédentes, **caractérisée en ce que**, dans la configuration de libération, l'ouverture (35) de la fourchette (21) est disposée en vis-à-vis de l'ouverture (33) de la piste de guidage (29).

9. Porte selon l'une des revendications précédentes, **caractérisée en ce que**, le doigt d'actionnement (32) ne se trouve jamais positionné dans la boucle (34A) de la fourchette (21) quelle que soit la position du mécanisme.

## Patentansprüche

1. Flugzeugtür mit seitlichem Ausweichen der Anschläge, die mit einem Verriegelungs-/Entriegelungsmechanismus ausgerüstet ist, der dazu bestimmt ist, den Übergang von der Schließstellung in die Entriegelungsstellung und umgekehrt zu steuern, wobei der Mechanismus Folgendes umfasst:
- einen Innenhebel (15) und einen Außenhebel (19), die an der Tür montiert sind und zwischen einer Verriegelungsstellung und einer Entriegelungsstellung beweglich sind;
- eine Steuerwelle (17), die sich entlang einer im Wesentlichen vertikalen Achse erstreckt und mittels einer Gelenkverbindung an der Tür montiert ist, wobei der Innenhebel (15) und der Außenhebel (19) transversal mit der Steuerwelle (17) verbunden sind, sodass ein Einwirken auf einen der Hebel (15, 19) die Steuerwelle (17) um ihre Achse drehantreibt;
- eine Führungsbahn (29), die sich in einer zu der Steuerwelle (17) im Wesentlichen orthogonalen Ebene erstreckt und an ihrem Ende eine Öffnung (33) umfasst;
- einen Betätigungsfinger (32), der an einem Stützarm befestigt ist, wobei dieser Betätigungsfinger (32) dazu angepasst ist, mit der Führungsbahn (29) zusammenzuwirken;
- eine mechanische Übertragungseinheit, die dazu angepasst ist, eine Bewegung des Betätigungsfingers (32) zu bewirken, wenn die Steuerwelle (17) in Drehung versetzt wird, wobei die Übertragungseinheit eine Gabel (21) umfasst, die gegenüber der Führungsbahn (29) angeordnet und mit der Steuerwelle (17) verbunden ist und zwei Betätigungsarme (34) und eine Öffnung (35) an ihrem Ende umfasst, sodass in einer Betätigungskonfiguration, die der Winkelverschiebung der Hebel (15, 19) zwischen ihrer Verriegelungsstellung und ihrer Entriegelungsstellung entspricht, das Schwenken der Gabel (21) eine Bewegung des Betätigungsfingers (32) entlang der Führungsbahn (29) bewirkt und in einer Freisetzungskonfiguration, in der sich die Hebel (15, 19) in der Entriegelungsstellung befinden, die Öffnung (35) der Gabel (21) gegenüber der Öffnung (33) der Führungsbahn (29) angeordnet ist, **dadurch gekennzeichnet, dass** sich die zwei Betätigungsarme (34) der Gabel (21) auf der zu ihrer Öffnung (35) entgegengesetzten Seite zu einer Schlaufe (34A) vereinen, die in Bezug auf die Längsachse der Arme (34) transversal versetzt ist, und dass das geschlossene Ende der Führungsbahn (29), das zu ihrer Öffnung (33) entgegengesetzt ist, über eine Schlaufe (29E) mit vergrößertem Durchmesser verfügt, deren Wand zusammen mit dem Betätigungsfinger (32) in der Schließstellung der Tür ein Spiel (d) begrenzt, dessen Ausgleich während einer Vorstufe der Entriegelung das Erzeugen einer auf die Tür ausgeübten Kraft nach innen gestattet.

2. Tür nach Anspruch 1, **dadurch gekennzeichnet, dass** sie eine Nockenscheibe (20) umfasst, die mit der Steuerwelle (17) drehfest verbunden ist.

3. Tür nach einem der vorhergehenden Ansprüche, **dadurch gekennzeichnet, dass** die Gabel (21) durch eine Welle (22) drehangetrieben wird, die ihrerseits durch die mechanische Übertragungseinheit drehangetrieben wird.

4. Tür nach Anspruch 3, **dadurch gekennzeichnet, dass** die vertikale Achse der Schlaufe (34A) der Gabel (21) in Bezug auf die Achse der Welle (22) versetzt ist, um eine mechanische Antriebswirkung zu erzeugen.

5. Tür nach einem der Ansprüche 2 bis 4, **dadurch gekennzeichnet, dass** die mechanische Übertragungseinheit einen Riemen (23) beinhaltet, der einerseits um die Welle (22) und andererseits an einer zwischengeschalteten mechanischen Umlenkeinheit (25) montiert ist, welche mit einer Rolle in Eingriff ist, die in einen in der Nockenscheibe (20) eingerichteten Pfad (26) eingefügt ist.

6. Tür nach einem der vorhergehenden Ansprüche, **dadurch gekennzeichnet, dass** in ihrer Betätigungskonfiguration der Betätigungsfinger (32) gleichzeitig in die Führungsbahn (29) und in die Gabel (21) eingefügt ist.

7. Tür nach einem der vorhergehenden Ansprüche, **dadurch gekennzeichnet, dass** der Betätigungsfinger (32) eine Doppelrolle umfasst.

8. Tür nach einem der vorhergehenden Ansprüche, **dadurch gekennzeichnet, dass** in der Freisetzungskonfiguration die Öffnung (35) der Gabel (21) gegenüber der Öffnung (33) der Führungsbahn (29) angeordnet ist.

9. Tür nach einem der vorhergehenden Ansprüche, **dadurch gekennzeichnet, dass** sich der Betätigungsfinger (32) unabhängig von der Stellung des Mechanismus niemals in der Schlaufe (34A) der Gabel (21) befindet.

## Claims

1. An aircraft door with lateral escape of stops equipped with a locking/unlocking mechanism for controlling the change from the closed position to the unlocking position and vice versa, said mechanism comprising:
- an internal lever (15) and an external lever (19), mounted on the door by being movable between a locking position and an unlocking position;
- a control shaft (17) extending along a substantially vertical axis, being mounted on the door by a pivot connection, the internal lever (15) and the external lever (19) being connected transversely to the control shaft (17) so that an action on one of the levers (15,19) causes the control shaft (17) to rotate around its axis;
- a guideway (29) extending in a plane substantially orthogonal to the control shaft (17) and having an opening at its end (33);
- an actuating finger (32) fixed on a support arm, said actuating finger (32) being adapted to cooperate with the guideway (29);
- a mechanical transmission adapted to cause a displacement of the actuating finger (32) when the control shaft (17) is operated in rotation, said transmission comprising a fork (21) disposed opposite the guideway (29) and connected to the control shaft (17) and comprising two actuating arms (34) and an opening (35) at its end such that, in an actuation configuration corresponding to the angular travel of the levers (15,19) between their locking position and their unlocking position, the pivoting of the fork (21) causes the actuating finger (32) to move along the guideway (29) and, in a release configuration where the levers (15,19) are in the unlocking position, the opening (35) of the fork (21) is disposed facing the opening (33) of the guideway (29), **characterized in that** the two actuation arms (34) of the fork (21) meet opposite its opening (35) in a loop (34A) which is offset transversely with respect to the longitudinal axis of the branches (34) and **in that** the closed end of the guide track (29) opposite its opening (33) is provided a loop (29E) of enlarged diameter, the wall of which delimits, with the actuating finger (32) in the closing position of the door, a clearance (d) the adjustment of which makes it possible to produce an inward force exerted on the door during a preliminary phase of unlocking.

2. A door according to claim 1, **characterised in that** it comprises a cam (20) rotating to the control shaft (17).

3. A door according to one of the preceding claims, **characterised in that** the fork (21) is rotated by a shaft (22) which is itself rotated by said mechanical transmission.

4. A door according to claim 3, **characterised in that** the vertical axis of the loop (34A) of the fork (21) is offset with respect to the shaft axis (22) in such a way as to produce a mechanical motor effect.

5. A door according to one of claims 2 to 4, **characterised in that** the mechanical transmission comprises a belt (23) mounted, on the one hand, around said shaft (22) and, on the other hand, on a idler (25) engaged with a roller inserted in a path (26) provided in said cam (20).

6. A door according to one of the preceding claims, **characterised in that**, in its actuation configuration, the actuating pinch (32) is inserted both in the guide track (29) and in the fork (21).

7. Door according to one of the preceding claims, **characterised in that** the actuating finger (32) comprises a double roller.

8. A door according to one of the preceding claims, **characterised in that** in the release configuration the opening (35) of the fork (21) is disposed opposite the opening (33) of the guideway (29).

9. A gate according to one of the preceding claims, **characterized in that** the actuating finger (32) is never positioned in the loop (34A) of the fork (21) regardless of the position of the mechanism.
